# EUROPÄISCHE PATENTSCHRIFT

(11) **EP 3 417 967 B1**
(45) Veröffentlichungstag und Bekanntmachung des Hinweises auf die Patenterteilung: **22.12.2021**
(21) Anmeldenummer: 18178616.1
(22) Anmeldetag: 19.06.2018
(51) Int. Cl.: B23D 59/00, B28D 7/02

(54) **SÄGEVORRICHTUNG**
SAWING DEVICE
DISPOSITIF DE SCIAGE

(30) Priorität: 23.06.2017 DE 102017113993
(43) Veröffentlichungstag der Anmeldung: 26.12.2018
(73) Patentinhaber: HOLZ-HER GmbH, 72622 Nürtingen (DE)
(72) Erfinder: STRASSER, Rainer, 4571 Steyrling (AT)
(74) Vertreter: Hoeger, Stellrecht & Partner Patentanwälte mbB

(56) Entgegenhaltungen:
- EP-A1- 2 711 116
- EP-A1- 2 801 430
- EP-A1- 2 944 409
- EP-A1- 3 081 325
- DE-A1-102008 058 162

## Beschreibung

Die Erfindung betrifft eine Sägevorrichtung zum Aufteilen plattenförmiger Werkstücke, mit einem Werkstückauflagetisch, der einen sich entlang einer Sägelinie verlaufenden Sägespalt aufweist, und mit einem entlang des Sägespalts verfahrbaren Sägeaggregat, das ein drehend antreibbares Sägeblatt aufweist, und mit einem anhebbaren und absenkbaren Druckbalken zum Andrücken der Werkstücke gegen den Werkstückauflagetisch.

Mit Hilfe einer derartigen Sägevorrichtung können plattenförmige Werkstücke, insbesondere Werkstücke aus Holz oder Holzersatzstoffen, beispielsweise Spanplatten, zugeschnitten werden. Hierbei können mehrere Werkstücke aufeinander gestapelt und gleichzeitig zugeschnitten werden.

Großformatige Werkstücke werden üblicherweise zunächst in einem Zuführbereich der Sägevorrichtung angeordnet und dann mit Hilfe einer Transporteinrichtung soweit in Richtung auf den Werkstückauflagetisch bewegt, dass sie relativ zu dem am Werkstückauflagetisch angeordneten Sägespalt eine programmtechnisch vorgebbare Stellung einnehmen. Die Transporteinrichtung weist hierzu üblicherweise mehrere im Abstand zueinander angeordnete Greifeinrichtung auf, mit deren Hilfe die Werkstücke ergriffen werden können, um sie dem Werkstückauflagetisch zuzuführen. Haben die Werkstücke ihre programmtechnisch vorgebbare Stellung relativ zum Sägespalt eingenommen, so werden sie mit Hilfe des Druckbalkens gegen den Werkstückauflagetisch gepresst, so dass sie sich während des Schnittvorgangs nicht bewegen können. Auf diese Weise können großformatige Werkstücke aufgeteilt werden.

Kleinformatige Werkstücke können vom Benutzer manuell am Werkstückauflagetisch positioniert und anschließend mittels des Druckbalkens am Werkstückauflagetisch festgelegt werden.

Mit Hilfe einer Sägevorrichtung der eingangs genannten Art können auch sogenannte "Kratzschnitte" durchgeführt werden. Bei einem Kratzschnitt wird ein plattenförmiges Werkstück oder ein Stapel plattenförmiger Werkstücke mit Hilfe des Sägeblatts nicht aufgeteilt, sondern es wird nur ein Rand des Werkstückes oder Werkstückstapels bearbeitet, wobei der Rand so relativ zur Sägelinie positioniert wird, dass das Sägeblatt nur mit einem Teil seiner Sägeblattbreite das Werkstück beziehungsweise den Werkstückstapel bearbeitet. Bei der Durchführung eines Kratzschnittes werden große Mengen an Staub- und Spanmaterial freigesetzt, wohingegen bei der Durchführung eines Trennschnittes das Anfallen von Staub- und Spanmaterial zu einem großen Teil innerhalb des in das Werkstück beziehungsweise Werkstückstapels eingesägten Schnittkanals in einen Bereich unterhalb des Werkstückauflagetisches geführt wird. Bei der Durchführung eines Kratzschnittes ist es daher häufig erforderlich, das freigesetzte Staub- und Spanmaterial manuell mit einem Besen oder einer Druckluftpistole zu entfernen.

In der DE 10 2013 201 848 B4 wird vorgeschlagen, das bei der Durchführung eines Kratzschnittes freigesetzte Staub- und Spanmaterial mit Hilfe einer Luftströmung an einen seitlichen Rand des Werkstückauflagetisches zu blasen. Zur Erzeugung der Luftströmung sind in den Werkstückauflagetisch Luftdüsen integriert, die einen Luftstrahl erzeugen, dessen Mittelachse eine dem seitlichen Rand des Werkstückauflagetisches zugewandte Komponente aufweist. Allerdings ist es auch bei Einsatz derartiger Luftdüsen in manchen Fällen erforderlich, nach der Durchführung eines Kratzschnittes den Werkstückauflagetisch in einem separaten Arbeitsschritt zu säubern.

Aus der EP 2 944 409 A1 ist eine Sägevorrichtung zum Aufteilen plattenförmiger Werkstücke bekannt, bei der der Druckbalken einen Saugkanal ausbildet, durch den hindurch Staub- und Spanmaterial vertikal nach oben abgesaugt werden kann. Seitlich neben dem Druckbalken lassen sich Rückhaltewände positionieren, die in vertikaler Richtung verstellt werden können und die ebenso wie der Druckbalken Blasdüsen tragen. Mittels der Rückhaltewände soll verhindert werden, dass sich das Staub- und Spanmaterial bei der Durchführung eines Kratzschnittes ungehindert in alle Richtungen verteilen kann. Ähnlich ausgestaltete Sägevorrichtungen, bei denen Staub- und Spanmaterial durch den Druckbalken hindurch nach oben abgesaugt werden kann, sind aus der EP 2 711 116 A1 und der DE 10 2008 058 162 A1 bekannt.

Die EP 3 081 325 A1 offenbart eine Sägevorrichtung zum Aufteilen plattenförmiger Werkstücke, bei der eine Druckbalkeneinrichtung mit einem ersten und einem zweiten Druckbalken zum Einsatz kommt. Die beiden Druckbalken bilden in Kombination mit einem C-förmigen Träger einen Saugkanal, durch den hindurch Staub- und Spanmaterial abgesaugt werden kann.

Die EP 2 801 430 A1 offenbart eine Sägevorrichtung, gemäß dem Oberbegriff des Anspruchs 1, bei der das Staub- und Spanmaterial ebenfalls durch den Druckbalken hindurch vertikal nach oben abgesaugt werden kann. Der Druckbalken bildet hierzu einen Saugkanal aus und das Staub- und Spanmaterial kann dem Saugkanal über eine Absaughaube zugeführt werden, die seitlich neben dem Sägeblatt der Sägevorrichtung positioniert und mit gleicher Vorschubgeschwindigkeit wie das Sägeblatt entlang der Sägelinie verfahren werden kann.

Aufgabe der vorliegenden Erfindung ist es, eine Sägevorrichtung der eingangs genannten Art derart weiterzubilden, dass das bei der Durchführung eines Kratzschnittes anfallende Staub- und Spanmaterial einfacher entsorgt werden kann.

Diese Aufgabe wird durch eine Sägevorrichtung mit den Merkmalen von Patentanspruch 1 gelöst.

Das bei der Durchführung eines Kratzschnittes anfallende Staub- und Sägematerial kann wirkungsvoll entsorgt werden, indem bei der Durchführung eines Kratzschnittes seitlich neben dem Sägeblatt eine Absaugeinrichtung positioniert wird, die mit derselben Vorschubgeschwindigkeit wie das Sägeblatt entlang der Sägelinie verfahrbar ist.

Bei der Durchführung eines Kratzschnittes nimmt die Absaugeinrichtung eine gleichbleibende Position relativ zum Sägeblatt ein, so dass das bei einem Kratzschnitt vom Sägeblatt erzeugte Staub- und Spanmaterial mit Hilfe der eine gleichbleibende Relativstellung zum Sägeblatt einnehmenden Absaugeinrichtung abgesaugt werden kann.

Während der Durchführung eines Kratzschnittes wird von der Absaugeinrichtung eine Saugströmung erzeugt, die das am Sägeblatt entstehende Staubund Spanmaterial erfasst, so dass das Staub- und Spanmaterial bereits bei seiner Entstehung abgesaugt werden kann und nicht erst entlang des Werkstückauflagetisches transportiert werden muss.

Gemäß der Erfindung ist die Absaugeinrichtung in vertikaler Richtung bewegbar an einem Schlitten gehalten, der parallel zur Sägelinie verfahrbar an einer Horizontalführung gehalten ist.

Der Schlitten kann beispielsweise nach Art einer Halteplatte ausgestaltet sein, die mit Hilfe von mindestens einem Führungselement an der Horizontalführung verfahrbar gelagert ist.

Vorzugsweise bildet das mindestens eine am Schlitten angeordnete Führungselement mit der Horizontalführung einen Formschluss aus. Die Horizontalführung kann beispielsweise als Führungsschiene ausgestaltet sein, und das mindestens eine Führungselement des Schlittens kann beispielsweise als Gleitschuh ausgebildet sein, der an der Führungsschiene entlang gleitet.

Die Absaugeinrichtung ist über eine vorzugsweise flexible Saugleitung mit einem Saugaggregat gekoppelt, mit dessen Hilfe die Saugströmung erzeugt werden kann, die das Staub- und Spanmaterial bereits im Bereich des Sägeblatts erfasst.

Von Vorteil ist es, wenn die Absaugeinrichtung eine Absaughaube aufweist, die über eine Saugleitung mit einem Saugaggregat verbunden ist. Die Absaughaube nimmt während der Durchführung eines Kratzschnittes eine gleichbleibende Position relativ zum Sägeblatt ein, da sie mit gleicher Vorschubgeschwindigkeit wie das Sägeblatt entlang der Sägelinie bewegt wird. Die Absaughaube kann unmittelbar neben dem das Sägeblatt überdeckenden Druckbalken positioniert werden und eine seitliche Abdeckung ausbilden, so dass das während der Durchführung des Kratzschnittes anfallende Staub- und Spanmaterial nicht unkontrolliert entweichen sondern abgesaugt werden kann.

Die Absaughaube ist günstigerweise zwischen einer angehobenen und einer abgesenkten Stellung hin und her bewegbar, wobei sie in der angehobenen Stellung einen Abstand zum Werkstückauflagetisch aufweist, und wobei sie sich in der der abgesenkten Stellung bis zum Werkstückauflagetisch erstreckt. Bei der Aufteilung eines Werkstücks kann die Absaughaube eine angehobene Stellung einnehmen, so dass das Aufteilen des Werkstücks, das heißt die Durchführung eines Trennschnitts, durch die Absaughaube nicht behindert wird. Bei der Durchführung eines Kratzschnittes kann die Absaughaube so weit abgesenkt werden, dass sie sich bis zum Werkstückauflagetisch erstreckt und das anfallende Staub- und Spanmaterial nicht ohne Weiteres entweichen sondern abgesaugt werden kann.

Die Absaughaube weist bei einer vorteilhaften Ausführungsform der Erfindung eine erste Seitenwand auf, die in der abgesenkten Stellung der Absaughaube in eine parallel zum Sägespalt verlaufende Aufnahmenut des Werkstückauflagetisches eintaucht. Die Aufnahmenut ist an der Oberseite des Werkstückauflagetisches angeordnet und erstreckt sich in gleich bleibendem Abstand zum Sägespalt entlang des Werkstückauflagetisches.

Es kann vorgesehen sein, dass die erste Seitenwand eine dem Werkstückauflagetisch zugewandte Kante aufweist, die in der abgesenkten Stellung der Absaughaube am Werkstückauflagetisch entlang gleitet. An der Kante können Gleitelemente, beispielsweise Borsten, angeordnet sein, die in der abgesenkten Stellung der Absaughaube den Werkstückauflagetisch kontaktieren.

Bevorzugt weist die Absaughaube ein Anlageelement auf zur gleitenden Anlage der Absaughaube am Druckbalken oder an einem Träger. Das Anlageelement kann bei einer Bewegung der Absaughaube am Druckbalken oder an einem Träger entlanggleiten.

Bevorzugt bildet das Anlageelement eine Dichtungseinrichtung aus. Die Dichtungseinrichtung ist derart eingerichtet, dass sie einem unkontrollierten Entweichen von Staub- und Spanmaterial aus dem von der Absaughaube überdeckten Bereich entgegenwirkt.

Die Dichtungseinrichtung kann beispielsweise mindestens einen Borsten- und/oder Elastomerstreifen aufweisen, der am Druckbalken oder an einem Träger gleitend anliegt.

Bevorzugt ist das Anlageelement an einer zweiten Seitenwand der Absaughaube positioniert. Die zweite Seitenwand ist bevorzugt in Richtung auf den Druckbalken versetzt zur ersten Seitenwand angeordnet.

Besonders günstig ist es, wenn die Absaughaube eine Deckenwand aufweist, über die die erste Seitenwand mit der zweiten Seitenwand verbunden ist. Die Deckenwand kann zwischen den beiden Seitenwänden eine oberseitige Abdeckung eines Saugraumes ausbilden, über den die vom Saugaggregat erzeugte Saugströmung dem Sägeblatt zugeführt werden kann. Der Saugraum kann beispielsweise vom Sägeblatt, der Absaughaube, der Oberseite des Werkstückauflagetisches und dem Druckbalken begrenzt sein.

Günstigerweise ist die Horizontalführung ortsfest an einer oberhalb des Werkstückauflagetisches angeordneten und parallel zur Sägelinie ausgerichteten Traverse gehalten.

Die Traverse erstreckt sich bei einer bevorzugten Ausgestaltung der Erfindung zwischen zwei Führungsanordnungen, an denen der Druckbalken senkrecht zum Werkstückauflagetisch verstellbar gehalten ist.

Um die Absaugeinrichtung relativ zum Schlitten in vertikaler Richtung zu bewegen, ist bei einer bevorzugten Ausgestaltung der Erfindung am Schlitten ein Hebeantrieb angeordnet.

Der Hebeantrieb kann beispielsweise als Elektromotor ausgestaltet sein. Alternativ kann vorgesehen sein, dass der Hebeantrieb als hydraulisches oder pneumatisches Kolben-Zylinder-Aggregat ausgebildet ist.

Bevorzugt ist am Schlitten mindestens eine Vertikalführung angeordnet, an der die Absaugeinrichtung in vertikaler Richtung verfahrbar gehalten ist.

Die Vertikalführung kann beispielsweise als Linearführung ausgestaltet sein. Insbesondere kann vorgesehen sein, dass die Vertikalführung eine Führungsschiene ausbildet, die mit einem ortsfest an der Absaugeinrichtung angeordneten Gleitschuh einen Formschluss ausbildet.

Besonders günstig ist es, wenn am Schlitten im Abstand zueinander zwei parallel zueinander ausgerichtete Vertikalführungen angeordnet sind, denn dadurch können Kippmomente gering gehalten werden.

Um das Positionieren der Werkstücke am Werkstückauflagetisch zu vereinfachen, kann die Sägevorrichtung eine ortsfest am Werkstückauflagetisch angeordnete Anschlagfläche aufweisen, an die die Werkstücke mit einer Schmalseite angelegt werden können. Um das Anlegen der Werkstücke zu erleichtern, wird häufig auf dem Werkstückauflagetisch ein Luftpolster gebildet, so dass die Werkstücke mit geringem Kraftaufwand verschoben werden können. Es muss dann allerdings darauf geachtet werden, dass die an die Anschlagfläche angelegten Werkstücke, bevor sie vom Druckbalken gegen den Werkstückauflagetisch gepresst werden, nicht unbeabsichtigt verrutschen. Es ist deshalb von Vorteil, wenn die Sägevorrichtung eine Anpresseinrichtung aufweist zum Anpressen eines Werkstückes oder eines Stapels von Werkstücken an die ortsfest am Werkstückauflagetisch angeordnete Anschlagfläche.

Von besonderem Vorteil ist es, wenn die Anpresseinrichtung an dem Schlitten angeordnet ist, an dem auch die Absaugeinrichtung gehalten ist. Der Schlitten bildet bei einer derartigen Ausgestaltung der Erfindung eine verfahrbare Halterung nicht nur für die Absaugeinrichtung sondern auch für die Anpresseinrichtung aus.

Es kann beispielsweise vorgesehen sein, dass auf der dem Druckbalken zugewandten Seite des Schlittens die Absaugeinrichtung angeordnet ist und dass auf der dem Druckbalken abgewandten Seite des Schlittens die Anpresseinrichtung angeordnet ist. Mit Hilfe der Anpresseinrichtung kann das Werkstück oder ein Stapel von Werkstücken gegen die ortsfeste Anschlagfläche gepresst werden. Anschließend kann der Druckbalken abgesenkt werden, so dass das Werkstück oder der Stapel von Werkstücken unter der Wirkung des Druckbalkens zuverlässig am Werkstückauflagetisch festgelegt wird. Es kann dann ein üblicher Trennschnitt durchgeführt werden, um das Werkstück oder den Stapel von Werkstücken aufzuteilen. In diesem Fall kann die Absaugeinrichtung ihre angehobene Stellung beibehalten. Soll allerdings ein Kratzschnitt durchgeführt werden, so kann die Absaugeinrichtung abgesenkt werden, um das bei der Durchführung des Kratzschnittes anfallende Staub- und Spanmaterial abzusaugen.

Günstig ist es, wenn die Anpresseinrichtung ein Anpresselement aufweist, das zwischen einer dem Werkstückauflagetisch angenäherten Anpressstellung und einer im Abstand zum Werkstückauflagetisch angeordneten Parkstellung hin und her bewegbar ist. Sofern es nicht erforderlich ist, das Werkstück oder den Stapel von Werkstücken gegen die ortsfeste Anschlagfläche zu pressen, kann das Anpresselement seine Parkstellung einnehmen, in der es einen Abstand zum Werkstückauflagetisch einnimmt. Soll jedoch ein Werkstück oder ein Stapel von Werkstücken gegen die Anschlagfläche gepresst werden, so kann das Anpresselement seine dem Werkstückauflagetisch angenäherte Pressstellung einnehmen.

Insbesondere kann vorgesehen sein, dass das Anpresselement in seiner Anpressstellung gegen eine der ortsfesten Anschlagfläche abgewandte Schmalseite des Werkstückes oder des Stapels von Werkstücken gepresst werden kann.

Das Anpresselement kann beispielsweise als frei drehbare Laufrolle ausgestaltet sein. Die Laufrolle kann gegen eine Schmalseite eines Werkstückes gepresst werden, während das Werkstück senkrecht zur Sägelinie in Richtung auf den Sägespalt transportiert wird, so dass das Werkstück bei dieser Transportbewegung an der Anschlagfläche entlang gleitet.

Die Anpresseinrichtung weist bevorzugt ein Antriebsorgan auf zum Bewegen des Anpresselements.

Das Antriebsorgan kann beispielsweise als Elektromotor ausgestaltet sein.

Bei einer bevorzugten Ausführungsform der Erfindung ist das Antriebsorgan als hydraulisches oder pneumatisches Kolben-Zylinder-Aggregat ausgestaltet.

Von besonderem Vorteil ist es, wenn das Anpresselement mittels des Antriebsorgans zwischen seiner Anpressstellung und seiner Parkstellung hin und her verschwenkbar ist.

Die Kopplung des Anpresselements mit dem Antriebsorgan erfolgt bei einer vorteilhaften Ausgestaltung der Erfindung über einen schwenkbar am Schlitten gelagerten Schwenkhebel.

Zum Verfahren des Schlittens parallel zur Sägelinie ist dem Schlitten bei einer vorteilhaften Ausgestaltung der Erfindung ein Fahrantrieb zugeordnet.

Der Fahrantrieb ist bevorzugt als Elektromotor oder als hydraulisches oder pneumatisches Kolben-Zylinder-Aggregat ausgebildet.

Von besonderem Vorteil ist es, wenn der Fahrantrieb ortsfest an einer oberhalb des Werkstückauflagetisches angeordneten und parallel zur Sägelinie ausgerichteten Traverse gehalten und über Kopplungselemente mit dem Schlitten gekoppelt ist. Wie bereits erwähnt, kann an der Traverse auch die Horizontalführung angeordnet sein, an der der Schlitten parallel zur Sägelinie verfahrbar gelagert ist.

Die Kopplungselemente, über die der Schlitten mit dem Fahrantrieb gekoppelt ist, weisen bei einer vorteilhaften Ausgestaltung der Erfindung ein endloses Zugmittel auf, das über ein erstes und ein zweites Umlenkelement geführt ist. Das Zugmittel kann beispielsweise in Form einer Kette oder eines Riemens ausgebildet sein.

Vorzugsweise ist das erste Umlenkelement als Umlenkrolle ausgestaltet, die vom Fahrantrieb in Drehung versetzbar ist, und das zweite Umlenkelement ist als frei drehbare Umlenkrolle ausgebildet, deren Drehachse parallel zur Drehachse der ersten Umlenkrolle ausgerichtet ist.

Die nachfolgende Beschreibung von zwei vorteilhaften Ausführungsformen der Erfindung dient im Zusammenhang mit der Zeichnung der näheren Erläuterung. Es zeigen:
- Figur 1:: eine perspektivische Darstellung einer ersten vorteilhaften Ausführungsform einer erfindungsgemäßen Sägevorrichtung;
- Figur 2:: eine Draufsicht auf die Sägevorrichtung aus Figur 1;
- Figur 3:: eine Schnittansicht der Sägevorrichtung längs der Linie 3-3 in Figur 2;
- Figur 4:: eine Seitenansicht der Sägevorrichtung in Richtung von Pfeil A aus Figur 3;
- Figur 5:: eine Seitenansicht entsprechend Figur 4 einer zweiten vorteilhaften Ausführungsform einer Sägevorrichtung, wobei ein Anpresselement einer Anpresseinrichtung eine Parkstellung einnimmt;
- Figur 6:: eine Seitenansicht der Sägevorrichtung aus Figur 5, wobei das Anpresselement eine Anpressstellung einnimmt.

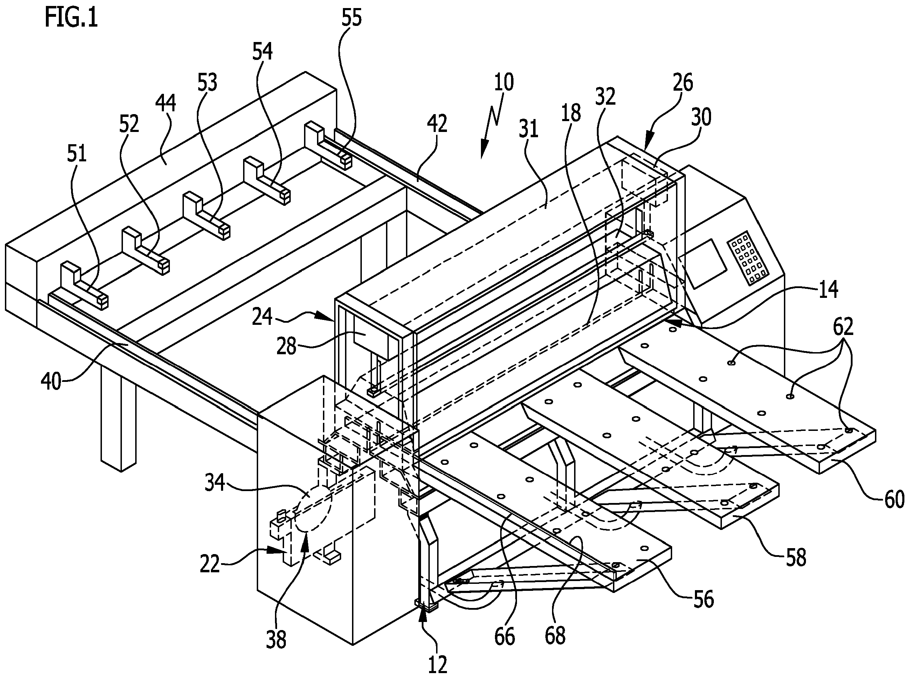

In den Figuren 1 bis 4 ist eine erste vorteilhafte Ausführungsform einer erfindungsgemäßen Sägevorrichtung schematisch dargestellt und insgesamt mit dem Bezugszeichen 10 belegt. Die Sägevorrichtung weist ein Maschinengestell 12 auf, das einen Werkstückauflagetisch 14 ausbildet mit einer ebenen, horizontal ausgerichteten Werkstückauflagefläche 16. Der Werkstückauflagetisch 14 weist einen Sägespalt 18 auf, der sich entlang einer Sägelinie 20 erstreckt. Unterhalb des Sägespalts 18 ist ein Transportwagen 22 entlang des Sägespalts 18 hin und her verfahrbar am Maschinengestell 12 gehalten.

An einander gegenüberliegenden Stirnseiten trägt das Maschinengestell 12 jeweils einen Druckbalkenturm 24, 26, der eine Führungsanordnung 28 bzw. 30 aufnimmt. Zwischen den beiden Führungsanordnungen 28, 30 erstreckt sich oberhalb des Werkstückauflagetisches 14 eine Traverse 31. Mittels der Führungsanordnungen 28, 30 ist an den Druckbalkentürmen 24, 26 ein Druckbalken 32 senkrecht zum Werkstückauflagetisch 14 verstellbar gehalten. Der Druckbalken 32 weist in üblicher Weise ein ungefähr U-förmiges Profil auf mit einem ersten Schenkel 33 und einem zweiten Schenkel 35, die über einen Steg 37 einstückig miteinander verbunden sind und eine schlitzförmige Druckbalkenöffnung 39 begrenzen. Bei der Durchführung eines Sägeschnittes kann in die Druckbalkenöffnung 39 ein am Transportwagen 32 verstellbar gehaltenes Sägeblatt 34 eines Sägeaggregats 38 eintreten.

Die Führungsanordnungen 28, 30 der beiden Druckbalkentürme 24, 26 umfassen in üblicher und deshalb in der Zeichnung zur Erzielung einer besseren Übersicht nicht dargestellter Weise Pneumatik- oder Hydraulikzylinder, mit denen der Druckbalken 32 angehoben und abgesenkt werden kann. Alternativ könnten zum Anheben und Absenken des Druckbalkens 32 auch Elektroantriebe zum Einsatz kommen.

Die Sägevorrichtung 10 weist zwei parallel zueinander und senkrecht zur Sägelinie 20 ausgerichtete Führungen 40, 42 auf, an denen ein Transportschlitten 44 in einer horizontal und senkrecht zur Sägelinie 20 ausgerichteten Transportrichtung 46 hin und her verschiebbar gehalten ist. Mittels eines an sich bekannten und deshalb in der Zeichnung zur Erzielung einer besseren Übersicht nicht dargestellten Transportantriebes kann der Transportschlitten 44 entlang der Führungen 40, 42 definiert hin und her bewegt werden.

Am Transportschlitten 44 sind mehrere im Abstand zueinander angeordnete Greifeinrichtungen 51, 52, 53, 54, 55 gehalten.

Auf der dem Transportschlitten 44 abgewandten Seite des Werkstückauflagetisches 14 schließen sich an den Werkstückauflagetisch 14 drei Auflageplatten 56, 58, 60 an, die im Abstand zueinander angeordnet sind. Auf ihrer Oberseite weisen die Auflageplatten 56, 58, 60 ebenso wie der Werkstückauflagetisch 14 Luftauslässe 62 auf, die von einer an sich bekannten und deshalb in der Zeichnung zur Erzielung einer besseren Übersicht nicht dargestellten Druckluftquelle mit Druckluft beaufschlagt werden können zur Ausbildung eines Luftpolsters.

Dem Druckbalkenturm 24 benachbart ist am Werkstückauflagetisch 14 eine parallel zur Transportrichtung 46 ausgerichtete Anschlagleiste 66 angeordnet. Die Anschlagleiste 66 erstreckt sich senkrecht zur Sägelinie 20 von einer Stirnseite des Werkstückauflagetisches 14 bis an das freie Ende der Auflageplatte 56. Mit einer der Werkstückauflagefläche 16 zugewandten Vorderseite bildet die Anschlagleiste 66 eine Anschlagfläche 68 aus. Wie nachfolgend noch näher erläutert wird, können Werkstücke mit einer ersten Schmalseite an die Anschlagfläche 68 angelegt werden.

Mit Hilfe der Sägevorrichtung 10 können plattenförmige Werkstücke, beispielsweise Werkstücke aus Holz oder Holzersatzstoffen, insbesondere Spanplatten, aufgeteilt werden. Mehrere großformatige Werkstücke können in einem Zuführbereich zwischen den beiden Führungen 40, 42 aufeinander gestapelt, von den Greifeinrichtungen 51 bis 55 erfasst und zum Aufteilen in Richtung auf den Sägespalt 18 verschoben werden. Der Transportschlitten 44 kann dann eine programmtechnisch vorgebbare Stellung einnehmen, um die großformatigen Werkstücke in definierter Weise zu positionieren und mittels des Sägeaggregats 38 aufzuteilen.

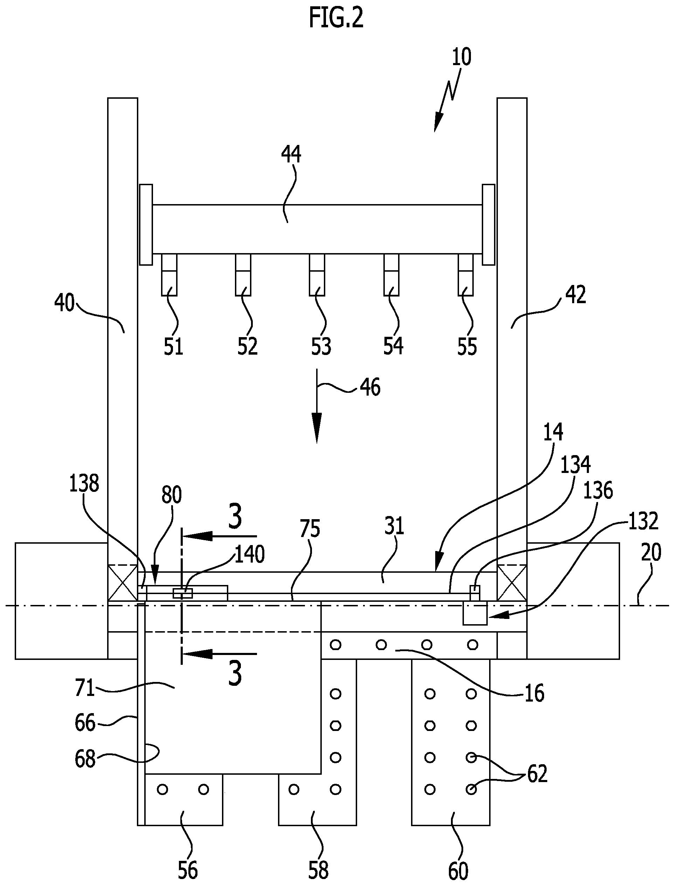

Zusätzlich zur Durchführung eines Trennschnittes, mit dem die Werkstücke aufgeteilt werden, kann mit Hilfe der Sägevorrichtung 10 auch ein sogenannter Kratzschnitt durchgeführt werden, bei dem das plattenförmige Werkstück oder auch ein Stapel plattenförmiger Werkstücke nicht aufgeteilt sondern nur an einem Rand bearbeitet werden, indem der Rand relativ zur Sägelinie 20 derart positioniert wird, dass das Sägeblatt 34 nur mit einem Teil seiner Sägeblattbreite das Werkstück bearbeitet. In den Figuren 2, 3 und 4 sind vier Werkstücke 71, 72, 73, 74 schematisch dargestellt, die aufeinander gestapelt sind und eine identische, im dargestellten Ausführungsbeispiel quadratische Form aufweisen und den Sägespalt 18 nur mit einem Rand 75 überragen. Bei der Durchführung eines Kratzschnittes bearbeitet das Sägeblatt 34 die Werkstücke 71 bis 74 somit nur mit einem Teil der Sägeblattbreite.

Während der Durchführung eines Kratzschnittes entsteht eine beträchtliche Menge an Staub- und Spanmaterial. Um dieses Staub- und Spanmaterial möglichst schon bei seiner Entstehung zu entsorgen, weist die Sägevorrichtung 10 eine Absaugeinrichtung 80 auf, die im dargestellten Ausführungsbeispiel auf der dem Transportschlitten 44 zugewandten Seite des Druckbalkens 32 angeordnet ist. Wie nachfolgend noch näher erläutert wird, kann die Absaugeinrichtung 80 bei der Durchführung eines Kratzschnittes seitlich neben dem Sägeblatt 34 positioniert und mit gleicher Vorschubgeschwindigkeit wie das Sägeblatt 34 entlang der Sägelinie 20 verfahren werden, so dass die Absaugeinrichtung 80 bei der Durchführung eines Kratzschnittes eine gleichbleibende Position relativ zum Sägeblatt 34 einnimmt.

Die Absaugeinrichtung 80 umfasst eine Absaughaube 82 mit einer im Wesentlichen vertikal ausgerichteten ersten Seitenwand 84, von der sich in Richtung auf den Druckbalken 32 eine im Wesentlichen horizontal ausgerichtete Deckenwand 86 erstreckt, an die sich eine im Wesentlichen parallel zur ersten Seitenwand 34 ausgerichtete, in vertikaler Richtung deutlich kürzere zweite Seitenwand 88 anschließt.

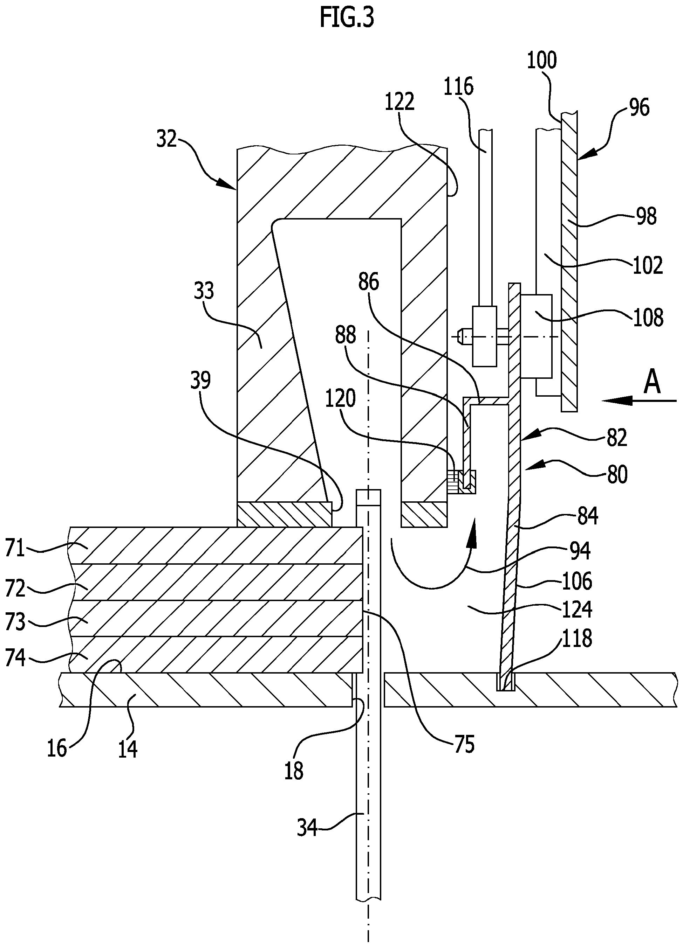

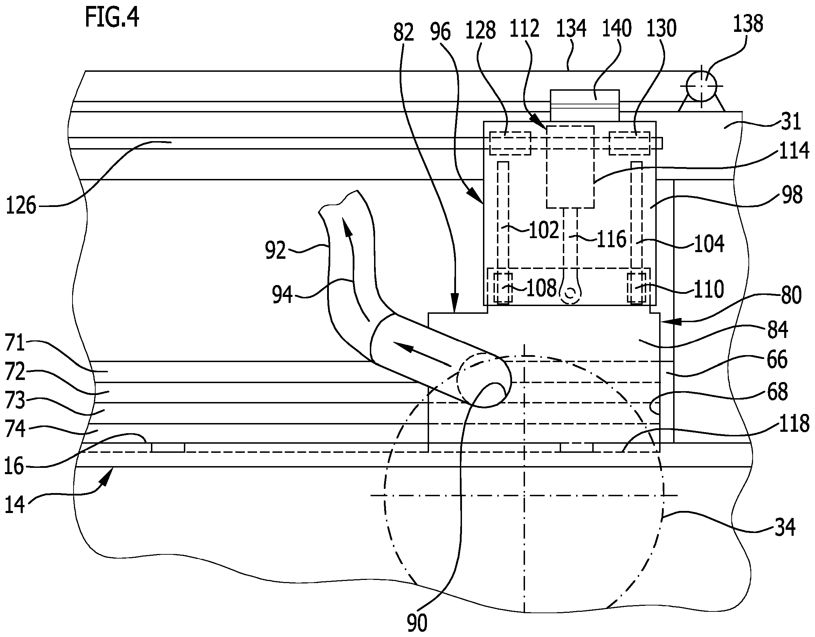

Wie aus Figur 4 deutlich wird, weist die erste Seitenwand 84 eine Absaugöffnung 90 auf, an die sich ein flexibler Saugschlauch 92 anschließt, dessen der Absaugöffnung 90 abgewandtes Ende, das zur Erzielung einer besseren Übersicht in der Zeichnung nicht dargestellt ist, mit einem an sich bekannten und deshalb in der Zeichnung zur Erzielung einer besseren Übersicht ebenfalls nicht dargestellten Saugaggregat in Strömungsverbindung steht. Mit Hilfe des Saugaggregats kann eine Saugströmung erzielt werden, die in den Figuren 3 und 4 durch die Pfeile 94 veranschaulicht ist.

Die Absaugeinrichtung 80 ist an einem Schlitten 96 in vertikaler Richtung zwischen einer angehobenen und einer abgesenkten Stellung hin und her verfahrbar gehalten. Der Schlitten 96 ist in Form einer Halteplatte 98 ausgebildet, an deren dem Druckbalken 32 zugewandter Vorderseite 100 im Abstand zueinander zwei Vertikalführungen 102, 104 in Form von Führungsprofilen angeordnet sind. Die Absaugeinrichtung 80 weist auf ihrer dem Druckbalken 32 abgewandten Rückseite 106 zwei Führungselemente in Form von Gleitschuhen 108, 110 auf, die jeweils formschlüssig mit einer Vertikalführung 102 bzw. 104 zusammenwirken, so dass die Absaugeinrichtung 80 mittels der Gleitschuhe 108, 110 und der Vertikalführungen 102, 104 in vertikaler Richtung hin und her verschiebbar am Schlitten 96 gehalten ist.

Zum Anheben und Absenken der Absaugeinrichtung 80 ist im dargestellten Ausführungsbeispiel an der Vorderseite 100 der Halteplatte 98 ein Hebeantrieb 112 in Form eines hydraulischen oder pneumatischen Kolben-Zylinder-Aggregats 114 gehalten mit einer Kolbenstange 116, deren freies Ende an der Absaughaube 82 festgelegt ist.

In den Figuren 3 und 4 ist die Absaugeinrichtung 80 in ihrer abgesenkten Stellung dargestellt. In dieser Stellung taucht das freie Ende der ersten Seitenwand 84 in eine oberseitig in den Werkstückauflagetisch 14 eingeformte Aufnahmenut 118 ein, die sich mit gleichbleibendem Abstand entlang des Sägespalts 18 erstreckt.

Die zweite Seitenwand trägt ein Anlageelement, das zur gleitenden Anlage am Druckbalken 32 eingerichtet ist. Im dargestellten Ausführungsbeispiel ist das Anlageelement als Borstenstreifen 120 ausgestaltet, der am Druckbalken 32 gleitend anliegt. Somit begrenzt die Absaughaube 82 in ihrer abgesenkten Stellung gemeinsam mit dem Druckbalken 32, dem Sägeblatt 34 und dem zwischen der Aufnahmenut 118 und dem Sägespalt 18 angeordneten Bereich des Werkstückauflagetisches 14 einen Saugraum 124, über den während der Durchführung eines Kratzschnitts anfallendes Staub- und Spanmaterial abgesaugt werden kann. Der Borstenstreifen 120 bildet eine Dichtungseinrichtung aus, die verhindert, dass Staub- und Spanmaterial unkontrolliert aus dem Saugraum 124 entweicht.

Soll statt eines Kratzschnittes ein üblicher Trennschnitt durchgeführt werden, so kann die Absaugeinrichtung 80 mittels des Hebeantriebs 112 in ihre angehobene Stellung bewegt werden, so dass sie die Durchführung des Trennschnitts nicht beeinträchtigt.

Zum Verfahren der Absaugeinrichtung 80 und insbesondere der Absaughaube 82 entlang der Sägelinie 20 ist der Schlitten 96 an einer Horizontalführung 126 verfahrbar gelagert. Die Horizontalführung 126 bildet ein Führungsprofil aus. Am Schlitten 96 sind zwei formschlüssig mit der Horizontalführung 126 zusammenwirkende Gleitschuhe 128, 130 angeordnet, die die Horizontalführung 126 im dargestellten Ausführungsbeispiel umgreifen.

Die Horizontalführung 126 ist an der Traverse 31 festgelegt und erstreckt sich bevorzugt über die gesamte Länge der Traverse 31.

Zum Verfahren des Schlittens 96 entlang der Horizontalführung 126 ist dem Schlitten 96 ein Fahrantrieb 132 in Form eines Elektromotors zugeordnet, der auf der Traverse 31 der Führungsanordnung 30 benachbart positioniert ist. Die Kopplung des Fahrantriebs 132 mit dem Schlitten 96 erfolgt über ein Zugmittel, das im dargestellten Ausführungsbeispiel als Kette 134 ausgestaltet ist. Die Kette 134 ist über ein erstes Umlenkelement in Form einer ersten Umlenkrolle 136 und ein zweites Umlenkelement in Form einer zweiten Umlenkrolle 138 geführt. Die erste Umlenkrolle 136 kann vom Fahrantrieb 132 in Drehung versetzt werden, und die zweite Umlenkrolle 138 ist frei drehbar gelagert. Der Schlitten 96 weist ein Klemmelement 140 auf, das an der Kette 134 festgelegt ist. Wird die erste Umlenkrolle 136 vom Fahrantrieb 132 in Drehung versetzt, so wird der Schlitten 96 und mit diesem auch die Absaugeinrichtung 80 entlang der Horizontalführung 126 verschoben. Die Geschwindigkeit des Schlittens 96 ist identisch mit der Vorschubgeschwindigkeit des Transportwagens 22 und damit auch identisch mit der Vorschubgeschwindigkeit des Sägeblatts 34, so dass der Schlitten 96 und mit diesem auch die Absaugeinrichtung 80 einschließlich der Absaughaube 82 bei der Durchführung eines Kratzschnittes eine gleichbleibende Position relativ zum Sägeblatt 34 einnimmt.

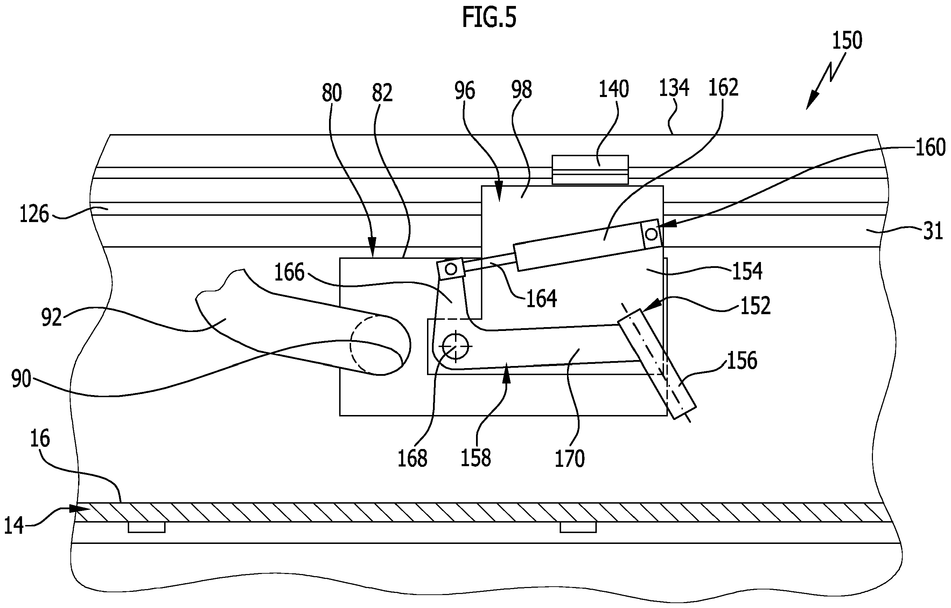

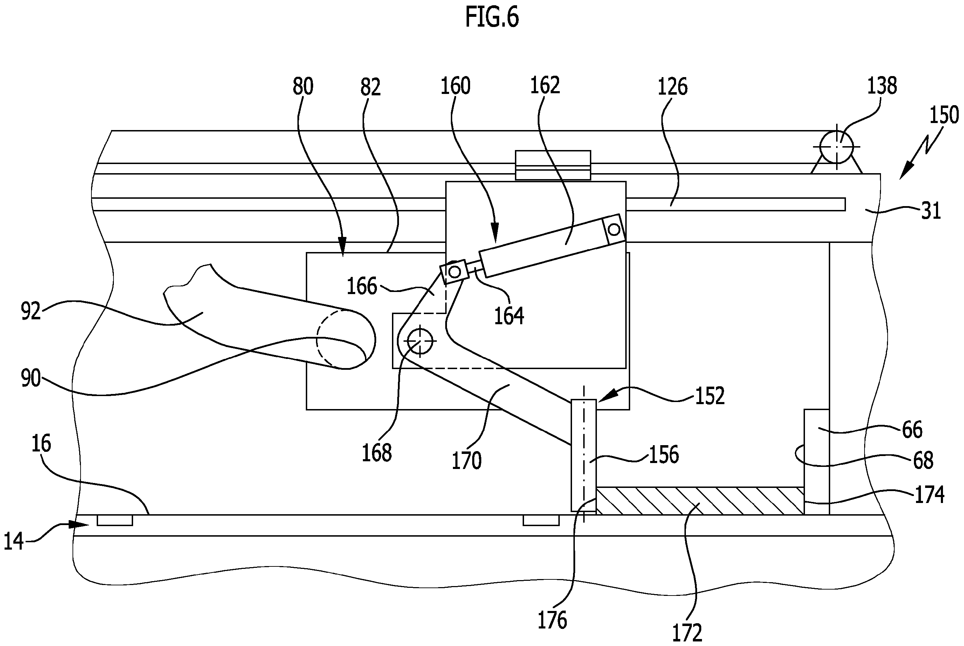

In den Figuren 5 und 6 ist schematisch eine zweite vorteilhafte Ausführungsform einer erfindungsgemäßen Sägevorrichtung dargestellt, die insgesamt mit dem Bezugszeichen 150 belegt ist. Die Sägevorrichtung 150 ist weitgehend identisch ausgebildet wie die voranstehend unter Bezugnahme auf die Figuren 1 bis 4 dargestellte Sägevorrichtung 10. Für identische Bauteile werden daher in den Figuren 5 und 6 dieselben Bezugszeichen verwendet wie in den Figuren 1 bis 4 und bezüglich dieser Bauteile wird zur Vermeidung von Wiederholungen auf die voranstehenden Erläuterungen Bezug genommen.

Die Sägevorrichtung 150 unterscheidet sich von der Sägevorrichtung 10 dadurch, dass sie zusätzlich zur Absaugeinrichtung 80 eine Anpresseinrichtung 152 aufweist, die an der dem Transportschlitten 44 zugewandten Rückseite 154 der Halteplatte 98 angeordnet ist. Die Anpresseinrichtung 152 weist ein Anpresselement in Form einer frei drehbaren Laufrolle 156 auf, die über einen zweiarmigen Schwenkhebel 158 mit einem ebenfalls an der Rückseite 154 der Halteplatte 98 angeordneten Antriebsorgan 160 gekoppelt ist. Das Antriebsorgan 160 ist als hydraulisches oder pneumatisches Kolben-Zylinder-Aggregat 162 ausgebildet und weist eine Kolbenstange 164 auf, die mit ihrem freien Ende an einem ersten Hebelarm 166 des Schwenkhebels 158 festgelegt ist. Der Schwenkhebel 158 ist um eine Schwenkachse 168 verschwenkbar an der Halteplatte 98 gelagert. Am freien Ende eines zweiten Hebelarms 170 des Schwenkhebels 158 ist die Laufrolle 156 drehbar gehalten. Mit Hilfe der Anpresseinrichtung 152 kann ein in Figur 6 dargestelltes plattenförmiges Werkstück 172 oder auch ein Stapel derartiger Werkstücke mit einer ersten Schmalseite 174 gegen die Anschlagfläche 68 gedrückt werden. Die Laufrolle 156 nimmt hierbei eine in Figur 6 dargestellte Anpressstellung ein, in der sie an einer der ersten Schmalseite 174 abgewandten zweiten Schmalseite 176 zur Anlage gelangt. Das Anpressen des Werkstücks 172 an die Anschlagfläche 68 kann so lange erfolgen, bis der Druckbalken 32 das Werkstück 172 gegen den Werkstückauflagetisch 14 presst. Die Anpresseinrichtung 152 kann dann mittels des Fahrantriebs 132 so weit in die dem Werkstück 172 abgewandte Richtung verfahren werden, dass die Laufrolle 156 vom Werkstück 172 ungehindert in eine in Figur 5 dargestellte Parkstellung verschwenkt werden kann.

Auch bei der in den Figuren 5 und 6 dargestellten Sägevorrichtung 150 ist an der Vorderseite 100 der Halteplatte 98 die voranstehend unter Bezugnahme auf die Figuren 2 bis 4 erläuterte Absaugeinrichtung 80 in vertikaler Richtung verfahrbar gelagert, so dass auch bei der Sägevorrichtung 150 Staub- und Spanmaterial, das bei der Durchführung eines Kratzschnittes anfällt, mittels der Absaugeinrichtung 80 abgesaugt werden kann, wie dies voranstehend bereits erläutert wurde.

## Patentansprüche

1. Sägevorrichtung zum Aufteilen plattenförmiger Werkstücke, mit einem Werkstückauflagetisch (14), der einen sich entlang einer Sägelinie (20) verlaufenden Sägespalt (18) aufweist, und mit einem entlang des Sägespalts (18) verfahrbaren Sägeaggregat (38), das ein drehend antreibbares Sägeblatt (34) aufweist, und mit einem anhebbaren und absenkbaren Druckbalken (32) zum Andrücken der Werkstücke gegen den Werkstückauflagetisch (14), und mit einer seitlich neben dem Sägeblatt (34) positionierbaren und mit gleicher Vorschubgeschwindigkeit wie das Sägeblatt (34) entlang der Sägelinie (20) verfahrbaren Absaugeinrichtung (80), **dadurch gekennzeichnet, dass** die Absaugeinrichtung (80) in vertikaler Richtung bewegbar an einem Schlitten (96) gehalten ist, der parallel zur Sägelinie (20) verfahrbar an einer Horizontalführung (126) gehalten ist.

2. Sägevorrichtung nach Anspruch 1, **dadurch gekennzeichnet, dass** die Absaugeinrichtung (80) eine Absaughaube (82) aufweist, die über eine Saugleitung (92) mit einem Saugaggregat verbunden ist.

3. Sägevorrichtung nach Anspruch 2, **dadurch gekennzeichnet, dass** die Absaughaube (82) zwischen einer angehobenen und einer abgesenkten Stellung hin und her bewegbar ist, wobei sie in der angehobenen Stellung einen Abstand zum Werkstückauflagetisch (14) einnimmt und wobei sie sich in der abgesenkten Stellung bis zum Werkstückauflagetisch (14) erstreckt.

4. Sägevorrichtung nach Anspruch 3, **dadurch gekennzeichnet, dass** die Absaughaube (82) eine erste Seitenwand (84) aufweist, die in der abgesenkten Stellung der Absaughaube (82) in eine parallel zum Sägespalt (18) verlaufende Aufnahmenut (118) des Werkstückauflagetisches (14) eintaucht.

5. Sägevorrichtung nach Anspruch 2, 3 oder 4, **dadurch gekennzeichnet, dass** die Absaughaube (82) ein Anlageelement aufweist zur gleitenden Anlage der Absaughaube (82) am Druckbalken (32) oder an einem Träger.

6. Sägevorrichtung nach Anspruch 5, **dadurch gekennzeichnet, dass** das Anlageelement eine Dichtungseinrichtung ausbildet.

7. Sägevorrichtung nach Anspruch 6, **dadurch gekennzeichnet, dass** die Dichtungseinrichtung mindestens einen Borsten- oder Elastomerstreifen (120) aufweist.

8. Sägevorrichtung nach Anspruch 5, 6 oder 7, **dadurch gekennzeichnet, dass** das Anlageelement an einer zweiten Seitenwand (88) der Absaughaube (82) angeordnet ist.

9. Sägevorrichtung nach Anspruch 8, **dadurch gekennzeichnet, dass** die Absaughaube (82) eine Deckenwand (86) aufweist, über die die erste Seitenwand (84) mit der zweiten Seitenwand (88) verbunden ist.

10. Sägevorrichtung nach einem der voranstehenden Ansprüche, **dadurch gekennzeichnet, dass** die Horizontalführung (126) ortsfest an einer oberhalb des Werkstückauflagetisches (14) angeordneten und parallel zur Sägelinie (20) ausgerichteten Traverse (31) gehalten ist.

11. Sägevorrichtung nach einem der voranstehenden Ansprüche, **dadurch gekennzeichnet, dass** am Schlitten (96) ein Hebeantrieb (112) angeordnet ist zum Anheben und Absenken der Absaugeinrichtung (80).

12. Sägevorrichtung nach Anspruch 11, **dadurch gekennzeichnet, dass** der Hebeantrieb als Kolben-Zylinder-Aggregat (114) ausgestaltet ist.

13. Sägevorrichtung nach einem der voranstehenden Ansprüche, **dadurch gekennzeichnet, dass** die Absaugeinrichtung (80) an mindestens einer Vertikalführung (102, 104) in vertikaler Richtung verfahrbar am Schlitten (96) gehalten ist.

14. Sägevorrichtung nach einem der voranstehenden Ansprüche, **dadurch gekennzeichnet, dass** am Schlitten (96) eine Anpresseinrichtung (152) angeordnet ist zum Anpressen eines Werkstücks (172) an eine ortsfest am Werkstückauflagetisch (14) angeordnete Anschlagfläche (68).

15. Sägevorrichtung nach Anspruch 14, **dadurch gekennzeichnet, dass** die Anpresseinrichtung (152) ein Anpresselement (156) aufweist, das zwischen einer dem Werkstückauflagetisch (14) angenäherten Anpressstellung und einer im Abstand zum Werkstückauflagetisch (14) angeordneten Parkstellung hin und her bewegbar ist.

16. Sägevorrichtung nach Anspruch 15, **dadurch gekennzeichnet, dass** die Anpresseinrichtung (152) ein Antriebsorgan (160) aufweist zum Bewegen des Anpresselements (156).

17. Sägevorrichtung nach Anspruch 16, **dadurch gekennzeichnet, dass** das Antriebsorgan (160) als Kolben-Zylinder-Aggregat (162) ausgestaltet ist.

18. Sägevorrichtung nach einem der voranstehenden Ansprüche, **dadurch gekennzeichnet, dass** dem Schlitten (96) ein Fahrantrieb (132) zugeordnet ist zum Verfahren des Schlittens (96).

19. Sägevorrichtung nach Anspruch 18, **dadurch gekennzeichnet, dass** der Fahrantrieb (132) als Elektromotor ausgestaltet ist.

20. Sägevorrichtung nach Anspruch 18 oder 19, **dadurch gekennzeichnet, dass** der Fahrantrieb (132) ortsfest an einer oberhalb des Werkstückauflagetisches (14) angeordneten und parallel zur Sägelinie (20) ausgerichteten Traverse (31) gehalten und über Kopplungselemente mit dem Schlitten (96) gekoppelt ist.

21. Sägevorrichtung nach Anspruch 20, **dadurch gekennzeichnet, dass** die Kopplungselemente ein endloses Zugmittel (134) aufweisen, das um ein erstes Umlenkelement (136) und ein zweites Umlenkelement (138) geführt ist.

## Claims

1. Sawing apparatus for dividing panel-shaped workpieces, comprising a workpiece supporting table (14) that has a sawing gap (18) extending along a sawing line (20), and comprising a sawing assembly (38) that can travel along the sawing gap (18) and has a rotatingly drivable saw blade (34), and comprising a raisable and lowerable pressure beam (32) for pressing the workpieces against the workpiece supporting table (14), and comprising a suction device (80) that is positionable laterally next to the saw blade (34) and can travel along the sawing line (20) at the same feed speed as the saw blade (34), **characterized in that** the suction device (80) is held on a carriage (96) so as to be movable in the vertical direction, said carriage (96) being held on a horizontal guide (126) so as to be able to travel in parallel to the sawing line (20).

2. Sawing apparatus in accordance with Claim 1, **characterized in that** the suction device (80) comprises a suction hood (82) that is connected to a suction assembly by way of a suction conduit (92).

3. Sawing apparatus in accordance with Claim 2, **characterized in that** the suction hood (82) is movable back and forth between a raised and a lowered position, wherein in the raised position it assumes a distance from the workpiece supporting table (14) and wherein in the lowered position it extends up to the workpiece supporting table (14).

4. Sawing apparatus in accordance with Claim 3, **characterized in that** the suction hood (82) comprises a first side wall (84) that in the lowered position of the suction hood (82) dips into a receiving groove (118) of the workpiece supporting table (14), said receiving groove (118) extending in parallel to the sawing gap (18).

5. Sawing apparatus in accordance with Claim 2, 3, or 4, **characterized in that** the suction hood (82) comprises an abutment element for slidingly abutting the suction hood (82) against the pressure beam (32) or against a support.

6. Sawing apparatus in accordance with Claim 5, **characterized in that** the abutment element forms a sealing device.

7. Sawing apparatus in accordance with Claim 6, **characterized in that** the sealing device comprises at least one bristle or elastomer strip (120).

8. Sawing apparatus in accordance with Claim 5, 6, or 7, **characterized in that** the abutment element is arranged on a second side wall (88) of the suction hood (82).

9. Sawing apparatus in accordance with Claim 8, **characterized in that** the suction hood (82) comprises a top wall (86), by way of which the first side wall (84) is connected to the second side wall (88).

10. Sawing apparatus in accordance with any one of the preceding Claims, **characterized in that** the horizontal guide (126) is stationarily held on a cross member (31) arranged above the workpiece supporting table (14) and aligned in parallel to the sawing line (20).

11. Sawing apparatus in accordance with any one of the preceding Claims, **characterized in that** a lifting drive (112) is arranged on the carriage (96) for raising and lowering the suction device (80).

12. Sawing apparatus in accordance with Claim 11, **characterized in that** the lifting drive is configured as a piston-cylinder assembly (114).

13. Sawing apparatus in accordance with any one of the preceding Claims, **characterized in that** the suction device (80) is held on the carriage (96) so as to be able to travel on at least one vertical guide (102, 104) in the vertical direction.

14. Sawing apparatus in accordance with any one of the preceding Claims, **characterized in that** a pressing device (152) is arranged on the carriage (96) for pressing a workpiece (172) against stop face (68) that is stationarily arranged on the workpiece supporting table (14).

15. Sawing apparatus in accordance with Claim 14, **characterized in that** the pressing device (152) comprises a pressing element (156) that is movable back and forth between a pressing position closer to the workpiece supporting table (14) and a park position arranged at a distance from the workpiece supporting table (14).

16. Sawing apparatus in accordance with Claim 15, **characterized in that** the pressing device (152) comprises a drive member (160) for moving the pressing element (156).

17. Sawing apparatus in accordance with Claim 16, **characterized in that** the drive member (160) is configured as a piston-cylinder assembly (162).

18. Sawing apparatus in accordance with any one of the preceding Claims, **characterized in that** a travel drive (132) is associated with the carriage (96) for moving the carriage (96).

19. Sawing apparatus in accordance with Claim 18, **characterized in that** the travel drive (132) is configured as an electric motor.

20. Sawing apparatus in accordance with Claim 18 or 19, **characterized in that** the travel drive (132) is stationarily held on a cross member (31) arranged above the workpiece supporting table (14) and aligned in parallel to the sawing line (20), and is coupled to the carriage (96) by way of coupling elements.

21. Sawing apparatus in accordance with Claim 20, **characterized in that** the coupling elements have an endless traction means (134) that is guided around a first redirection element (136) and a second redirection element (138).

## Revendications

1. Dispositif de sciage pour diviser des pièces en forme de plaque, avec une table porte-pièce (14), qui présente une fente de sciage (18) s'étendant le long d'une ligne de sciage (20), et avec un groupe de sciage (38) déplaçable le long de la fente de sciage (18), qui présente une lame de sciage (34) pouvant être entraînée en rotation, et avec une barre de pression (32) pouvant être levée et abaissée pour presser les pièces contre la table porte-pièce (14), et avec un système d'aspiration (80) pouvant être positionné latéralement à côté de la lame de sciage (34) et déplaçable le long de la ligne de sciage (20) à la même vitesse d'avance que la lame de sciage (34), **caractérisé en ce que** le dispositif d'aspiration (80) est retenu de manière mobile dans la direction verticale sur un coulisseau (96), qui est retenu sur un guidage horizontal (126) de manière déplaçable parallèlement à la ligne de sciage (20).

2. Dispositif de sciage selon la revendication 1, **caractérisé en ce que** le système d'aspiration (80) présente une hotte d'aspiration (82), qui est reliée à un groupe d'aspiration par l'intermédiaire d'une conduite d'aspiration (92).

3. Dispositif de sciage selon la revendication 2, **caractérisé en ce que** la hotte d'aspiration (82) est mobile en va-et-vient entre une position levée et une position abaissée, dans lequel, dans la position levée, il présente une distance par rapport à la table porte-pièce (14) et dans lequel, dans la position abaissée, il s'étend jusqu'à la table porte-pièce (14).

4. Dispositif de sciage selon la revendication 3, **caractérisé en ce que** la hotte d'aspiration (82) présente une première paroi latérale (84), qui, dans la position abaissée de la hotte d'aspiration (82), s'enfonce dans une rainure de réception (118) de la table porte-pièce (14) s'étendant parallèlement à la fente de sciage (18).

5. Dispositif de sciage selon la revendication 2, 3 ou 4, **caractérisé en ce que** la hotte d'aspiration (82) présente un élément d'appui pour l'appui glissant de la hotte d'aspiration (82) sur la barre de pression (32) ou sur un support.

6. Dispositif de sciage selon la revendication 5, **caractérisé en ce que** l'élément d'appui réalise un système d'étanchéité.

7. Dispositif de sciage selon la revendication 6, **caractérisé en ce que** le système d'étanchéité présente au moins une bande de poils ou élastomère (120).

8. Dispositif de sciage selon la revendication 5, 6 ou 7, **caractérisé en ce que** l'élément d'appui est disposé sur une deuxième paroi latérale (88) de la hotte d'aspiration (82).

9. Dispositif de sciage selon la revendication 8, **caractérisé en ce que** la hotte d'aspiration (82) présente une paroi supérieure (86), par l'intermédiaire de laquelle la première paroi latérale (84) est reliée à la deuxième paroi latérale (88).

10. Dispositif de sciage selon l'une quelconque des revendications précédentes, **caractérisé en ce que** le guidage horizontal (126) est retenu de manière fixe sur une traverse (31) disposée au-dessus de la table porte-pièce (14) et orientée parallèlement à la ligne de sciage (20) .

11. Dispositif de sciage selon l'une quelconque des revendications précédentes, **caractérisé en ce qu'**un entraînement de levage (112) est disposé sur le coulisseau (96) pour le levage et l'abaissement du système d'aspiration (80).

12. Dispositif de sciage selon la revendication 11, **caractérisé en ce que** l'entraînement de levage est réalisé sous la forme d'un groupe piston-cylindre (114).

13. Dispositif de sciage selon l'une quelconque des revendications précédentes, **caractérisé en ce que** le système d'aspiration (80) est retenu sur le coulisseau (96) de manière à pouvoir se déplacer dans la direction verticale sur au moins un guidage vertical (102, 104).

14. Dispositif de sciage selon l'une quelconque des revendications précédentes, **caractérisé en ce qu'**un système de pressage (152) est disposé sur le coulisseau (96) pour presser une pièce (172) sur une surface de butée (68) disposée fixement sur la table porte-pièce (14).

15. Dispositif de sciage selon la revendication 14, **caractérisé en ce que** le système de pressage (152) présente un élément de pressage (156), qui est mobile en va-et-vient entre une position de pressage rapprochée de la table porte-pièce (14) et une position d'arrêt disposée à distance de la table porte-pièce (14).

16. Dispositif de sciage selon la revendication 15, **caractérisé en ce que** le système de pressage (152) présente un organe d'entraînement (160) pour faire se mouvoir l'élément de pressage (156).

17. Dispositif de sciage selon la revendication 16, **caractérisé en ce que** l'organe d'entraînement (160) est conçu en tant que groupe piston-cylindre (162).

18. Dispositif de sciage selon l'une quelconque des revendications précédentes, **caractérisé en ce qu'**un mécanisme de propulsion (132) est associé au coulisseau (96) pour déplacer le coulisseau (96).

19. Dispositif de sciage selon la revendication 18, **caractérisé en ce que** le mécanisme de propulsion (132) est conçu en tant que moteur électrique.

20. Dispositif de sciage selon la revendication 18 ou 19, **caractérisé en ce que** le mécanisme de propulsion (132) est retenu de manière fixe sur une traverse (31) disposée au-dessus de la table porte-pièce (14) et orientée parallèlement à la ligne de sciage (20) et accouplée au coulisseau (96) par l'intermédiaire d'éléments d'accouplement.

21. Dispositif de sciage selon la revendication 20, **caractérisé en ce que** les éléments d'accouplement présentent un moyen de traction sans fin (134), qui est guidé autour d'un premier élément de renvoi (136) et d'un deuxième élément de renvoi (138).
